# EUROPÄISCHE PATENTSCHRIFT

(11) **EP 0 369 195 B1**
(45) Veröffentlichungstag und Bekanntmachung des Hinweises auf die Patenterteilung: **17.05.1995**
(21) Anmeldenummer: 89119589.3
(22) Anmeldetag: 21.10.1989
(51) Int. Cl.: B29C 47/08

(54) **Extrusionskopf**
Extrusion head
Tête d'extrusion

(30) Priorität: 17.11.1988 DE 3838877
(43) Veröffentlichungstag der Anmeldung: 23.05.1990
(73) Patentinhaber: Fried. Krupp AG Hoesch-Krupp, 45143 Essen (DE)
(72) Erfinder: Hirschkorn, Ingo, D-2153 Neu Wulmstorf (DE)

(56) Entgegenhaltungen:
- CH-A- 587 117
- DE-C- 3 709 248
- US-A- 3 025 959
- US-A- 3 299 474
- PATENT ABSTRACTS OF JAPAN vol. 3, no. 37 (C-41)29. März 1979
- & JP-A-54 11 168 (YOKOHAMA GOMU K.K. ) 27. Januar 1979

## Beschreibung

Die Erfindung betrifft einen Extrusionskopf nach dem Oberbegriff des Anspruchs 1. Ein solcher Extrusionskopf ist aus der JP-A-5411168 bekannt.

Zum Auswechseln einer Kassette bzw. Vorformleiste in einem Extruder ist es bekannt, diese in ihrer eigenen Längserstreckung in eine dafür vorgesehene Ausnehmung im Extrusionskopf seitlich ein- und auszuschieben (vgl. z.B. DE-OS 36 29 096 A1 und DE-PS 37 09 248 C1). Wegen der erheblichen Länge der Kasssetten (bis zu 1200 mm) vergeht selbst bei großen Vorschubgeschwindigkeiten eine spürbare Zeit bis die in Benutzung gewesene Kasssette aus dem Bereich des Extrusionskopfes herausgedrückt und eine neue eingeschoben ist. Da während dieser Zeit - bei laufenden Extrudern - eine spürbare Masse an zu extrudierendem Material anfallen würde, müssen die Extruder bei einem Kassettenwechsel gemäß dem Stand der Technik angehalten werden. Dies bedeutet aber nicht nur einen unmittelbaren Produktionsstillstand, es ergibt sich durch den Stillstand auch die Notwendigkeit, den Extrusionsvorgang beim Anlaufen der Extruder neu einregeln zu müssen, wobei durch das instationäre Strömungsverhalten während der Anfahrphase noch ein erheblicher Teil des extrudierten Profilsteifens als Abfall anfällt.

Bei der Vorrichtung gemäß der JP-A-5411168 erfolgt die Extrudatdurchströmung der Kassetten tangential zur Kassettentrommel.

Der Erfindung liegt die Aufgabe zugrunde, einen Extrusionskopf so zu gestalten, daß die Zeit zum Auswechseln einer Kassette erheblich reduziert wird.

Diese Aufgabe wird durch die im kennzeichnenden Teil des Anspruchs 1 beschriebenen Merkmale gelöst. Durch die Schwenkbarkeit der Kassettentrommel kann die in Betrieb befindliche Kassette quer zu ihrer Längserstreckung entfernt werden, wofür entsprechend dem relativ kurzen Weg nur sehr wenig Zeit erforderlich ist. Gleichzeitig wird eine neue Kassette über denselben kurzen Weg eingeschwenkt. Durch die erfindungsgemäßen Merkmale kann die Zeit zum Kassettenwechsel derart reduziert werden, daß die Extruder in der Regel nicht angehalten zu werden brauchen. Als Abfall ergibt sich dadurch im wesentlichen nur noch das beim Wechsel in den Raum zwischen den beiden zu verschwenkenden Kassetten extrudierte Material.

Vorteilhafte Weiterbildungen der Erfindung sind in den Unteransprüchen beschrieben. Während es naheliegt, die Ausnehmungen in der Kassettentrommel für die Kassetten um 90° zueinander versetzt anzuordnen, kann es vorteilhaft sein, den Winkel kleiner auszubilden, um den erforderlichen Schwenkweg und die daraus resultierende Wechselzeit noch zu verkürzen.

Um eine in der unteren Lage eingeschobene Kassette sicher zu plazieren und einen radialen Versatz der Kassetten beim Schwenken sicher zu vermeiden, ist vorgesehen, die Ausnehmungen der Kassettentrommel als hinterschnittene Ausnehmung auszubilden.

Durch die Merkmale des Anspruchs 4 wird ein Weg aufgezeigt, die Kassettentrommel zum Zwecke des Reinigens des Extrusionskopfes von diesem wegschwenken zu können.

Durch je ein eigenes Bewegungs- und Anpreßsystem nach Anspruch 5 ist es möglich, unterschiedliche Bedingungen für das Verschwenken der Kassetten und den betriebsbereiten Zustand zu verwirklichen.

Bei einer bevorzugten Ausführungsform sind die Anlagefläche des Extrusionskopfes und die ihr entsprechende hintere Fläche der Kassette nach Anspruch 6 zylindrisch mit gleichem Radius ausgebildet. Die Kassettentrommel befindet sich in koaxialer Lage mit der Anlagefläche des Extrusionskopfes und kann somit unmittelbar ohne zusätzliche lineare Bewegung geschwenkt werden. Es ist lediglich eine Herabsetzung oder Wegnahme des Anpreßdrucks auf die Kassettentrommel gegen den Extrusionskopf erforderlich.

Nach einer anderen Ausführungsform sind die Anlagefläche des Extrusionskopfes und die hintere Fläche der Kassette eben ausgebildet. Zum Schwenken muß die Kassettentrommel um einen solchen Hub von dem Extrusionskopf wegbewegt werden, bei dem die Kanten der hinteren Kassettenfläche ungehindert am Extrusionskopf vorbeigleiten können.

Ausführungsbeispiele der Erfindung sind in der Zeichnung schematisch dargestellt und werden im folgenden näher beschrieben. Es zeigen:
- Fig. 1: einen Extrusionskopf mit einer Kassettentrommel in der Seitenansicht,
- Fig. 2: den Extrusionskopf in einer auszugsweisen, teilweise geschnittenen Seitenansicht,
- Fig. 3: den Extrusionskopf mit der Kassettentrommel in einer anderen Stellung,
- Fig. 4: eine andere Ausführungsform der Ausnehmungen der Kassettentrommel in der Seitenansicht und
- Fig. 5: einen Extrusionskopf mit einer anderen Ausführungsform einer Kassettentrommel in einer auszugsweisen Seitenansicht.

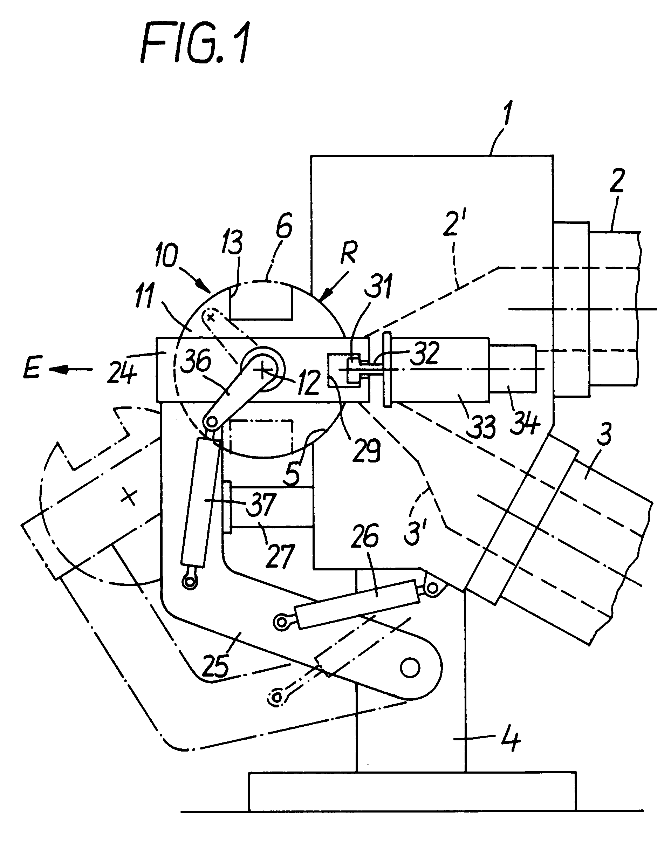

Der Extrusionskopf 1 gemäß Fig. 1 ist als an zwei Extruder 2, 3 angeschlossener Duplexkopf ausgebildet, der von einer Stütze bzw. einem Ständer 4 gehalten wird. Dabei können die Anordnung der beiden Extruder 2, 3 und der konstruktive Aufbau des Extrusionskopfes 1 mit den Fließkanälen 2′, 3′ beispielsweise der aus der DE-OS 36 13 071 bekannten Anordnung entsprechen.

Der Extrusionskopf 1 weist über seine ganze Breite eine zylindrische Anlagefläche 5 auf. Im betriebsbereiten Zustand des Extrusionskopfes steht eine Kassette oder Vorformleiste 6 mit der Anlagefläche 5 im Eingriff. Dazu weist die Kassette 6 eine - mit Blick entgegen der Extrusionsrichtung E - hintere zylindrische Fläche 7 auf, die den gleichen Radius R hat wie die Anlagefläche 5. Die Kassette 6 mit einer Profil- oder Fertigleiste 8 ist in einer Kassettentrommel 10 eingebettet.

Die Kassettentrommel 10 besteht aus zwei seitlichen kreisrunden Scheiben 11 mit jeweils zwei parallel zur Achse 12 der Kassettentrommel angeordneten und untereinander fluchtenden Ausnehmungen 13, 14. Der Radius der Scheiben 11 ist zumindest geringfügig kleiner als der der Anlagefläche 5. Die Form bzw. Kontur der Ausnehmungen 13, 14 entsprechen dem Querschnitt der Kassette 6. Zwischen den Scheiben 11 sind vier Stege 15, 16, 17, 18 angeordnet, von denen die jeweils über Eck benachbarten Stege 15, 16 bzw. 16, 17 jeweils eine Ausnehmung 19, 20 aufweisen, die fluchtend mit den Ausnehmungen 13, 14 ausgebildet ist. Die Stege 15...18 bilden zwei sich in der jeweiligen Extrusionsrichtung erweiternde innere Durchlaßöffnungen 21, 22 für den zu extrudierenden (nicht dargestellten) Profilstreifen. Aus Festigkeitsgründen ist die Kassettentrommel vorzugsweise aus einem Stück hergestellt.

Die Kassettentrommel 10 ist mit zwei (nicht gesondert dargestellten) Lagerzapfen in zwei seitlichen Lagerkörpern 24 gelagert, die jeweils am freien beweglichen Ende von an dem Ständer 4 angelenkten Hebeln 25 angeordnet sind. Die Hebel 25 sind jeweils durch einen am Extrusionskopf 1 angelenkten Druckmittelzylinder 26 einerseits gegen einen am Extrusionskopf 1 angeordneten Anschlag 27 und andererseits - z.B. zum Zwecke des Öffnens und Reinigens des Extrusionskopfes - von diesem wegbewegbar (vgl. strichpunktierte Lage in Fig. 1).Der Anschlag 27 ist derart bemessen, daß die Kassettentrommel 10 mit der Kassette 6 die Anlagefläche 5 nicht oder allenfalls ohne besonderen Flächendruck berührt.

Die Lagerkörper 24 weisen an ihrem dem Extrusionskopf 1 zugewandten Ende eine Durchgangsöffnung mit einer hinterschnittenen Ausnehmung 29 auf, in die das hammerartige Ende 31 einer Kolbenstange eines Hydrozylinders 33 eingreift. Jeder Hydrozylinder 33 ist mit einem Drehwerk 34 ausgestattet, mit dessen Hilfe die Kolbenstange mit dem hammerartigen Ende 31 jeweils um 90° gedreht werden kann. Das hammerartige Ende 31 der Kolbenstange, die Durchlaßöffnung mit dem Hohlraum bzw. der Ausnehmung 29 und das Drehwerk 34 sind dabei z.B. in der in der DE-OS 37 36 231 A1 offenbarten Form ausgeführt.

An den Zapfen der Kassettentrommel 10 sind außerhalb der Lagerkörper 24 Hebel 36 angeordnet. Dabei sind die Hebel 36 z.B. über eine Keilwellenverbindung mit den Zapfen verbunden, so daß die Kassettentrommel 10 über die Hebel 36 verschwenkt werden kann. Die freien Enden der Hebel 36 sind mit einem an den Hebeln 25 angelenkten Druckmittelzylinder 37 verbunden.

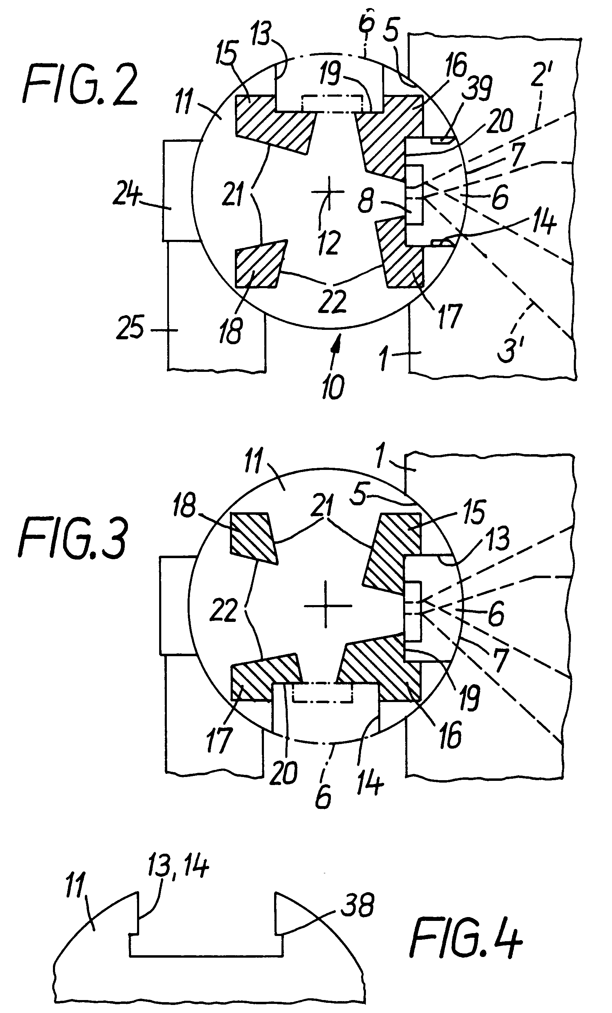

Um die Kassetten 6 radial in der Kassettentrommel 10 zu fixieren und sie gegen die Fliehkraft beim Schwenken zu sichern, sind die Ausnehmungen 13, 14 mit einer hinterschnittenen Ausnehmung 38 (vgl. Fig. 4) ausgebildet. In Abwandlung dazu können die Kassettentrommel oder die Kassetten auch mit Dauermagneten ausgerüstet sein.

An die Stelle der Hydrozylinder 33 und der durch die hinterschnittene Ausnehmung 29 und das hammerartige Ende 31 gebildeten lösbaren Kupplung können auch andere Spannsysteme wie z.B. ein schwenkbarer Spannrahmen treten (vgl. z.B. DE-AS 22 36 363).

Anstelle der schwenkbaren Hebel 36 kann z.B. ein auf die Kassettentrommel 10 wirkender (nicht dargestellter) Zahnstangentrieb vorgesehen sein.

Um den Extrusionskopf 1 betriebsbereit zu machen, wird eine Kassette 6 mit der Profilleiste 8 bei der in Fig. 2 dargestellten Lage der Kassettentrommel 10 in die oben befindliche Ausnehmung 13, 19 eingebracht und die Kassettentrommel 10 durch Betätigen der Druckmittelzylindser 37 derart um 90° gedreht, daß die Kassette 6 in ihre betriebsbereite Position gelangt. Anschließend wird das hammerartige Ende 31 der Kolbenstange 32 in die Ausnehmung 29 des Lagerkörpers 24 eingefahren und nach Drehen durch das Drehwerk 34 um 90° zurückgezogen, so daß die Kassette 6 über den Lagerkörper 24 und die Kassettentrommel 10 ggf. entgegen der elastischen Widerstandskraft der Hebel 25 gegen die Anlagefläche 5 des Extrusionskopfes 1 mit vorgebbarem Druck angepreßt wird.

Zur Vorbereitung eines Kassettenwechsels wird eine weitere, neue Kassette in die nunmehr unten befindliche, freie Ausnehmung 14/20 eingeschoben. Zum eigentlichen Kassettenwechsel wird der Hydrozylinder 33 derart betätigt, daß das hammerartige Ende 31 keinen Druck mehr auf den inneren Anschlag der Ausnehmung 29 ausübt, so daß die Flächenpressung der in Betrieb befindlichen Kassette abgebaut wird und sich ggf. ein kleiner Spalt zwischen der hinteren Fläche 7 der Kassette 6 und der Anlagefläche 5 bildet. Durch Einziehen der Kobenstangen der Druckmittelzylinder 37 werden die Hebel 36 um 90° nach unten zurückgeschwenkt, so daß die bisher in Betrieb befindliche Kassette nach oben und die neue Kassette in die Betriebsstellung eingeschwenkt wird. Das beim Wechsel der Kassetten austretende Extrudat wird von der neuen Kassette entlang der Anlagefläche 5 weitergeschoben und kann später beseitigt werden.

Zum präzisen Abstreifen können die Kassetten mit Abstreifmessern 39 bestückt sein.

Während des Kassettenwechsels bleiben die Druckmittelzylinder 26 unter Spannung. Unmittelbar nach dem Kassettenwechsel wird der Hydrozylinder 33 wieder mit Druck beaufschlagt, so daß die neue Kassette mit dem erforderlichen Betriebsdruck gegen den Extrusionskopf angedrückt wird. Die bisher benutzte Kassette kann während des Betriebs oben entnommen und wiederum durch eine neue ersetzt werden.

Zum Öffnen und Reinigen des Extrusionskopfes wird die Kassettentrommel 10 durch Ausfahren der Kolbenstange der Druckmittelzylinder 26 in die in Fig. 1 strichpunktiert dargestelte Lage weggeschwenkt.

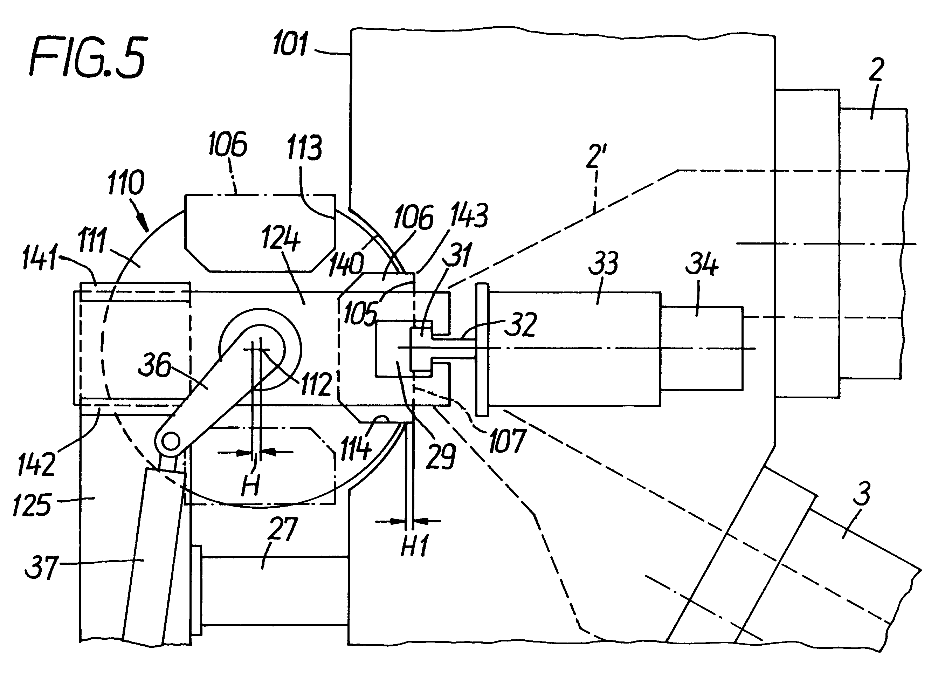

Bei dem in Fig. 5 dargestellten Ausführungsbeispiel des Extrusionskopfes sind gleiche Teile mit gleichen Bezugszeichen und solche Teile, die denen des Ausführungsbeispiels nach den Fig. 1 bis 4 nur im Prinzip gleichen mit einem um die Zahl 100 erhöhten Bezugszeichen versehen. Bei diesem Ausführungsbeispiel weist der Extrusionskopf 101 eine plangestaltete, ebene Anlagefläche 105 auf, die gegenüber der übrigen Ausnehmung 140 des Extrusionskopfes 101 um das Maß H1 versenkt ist. Entsprechend ist die hintere Fläche 107 der Kassette 106 ebenfalls eben ausgebildet. Der Lagerkörper 124 ist in einer am Hebel 125 angeordneten Führung 141, 142 bei an dem Anschlag 27 anliegendem Hebel 125 senkrecht zur Anlagefläche 105 gleitbar geführt. Die Bewegung des Lagerkörpers 124 kann durch den Hydraulikzylinder 33 erfolgen.

Zum Kassettenwechsel wird zunächst der Lagerkörper 124 um einen Hub H vom Extrusionskopf 101 wegbewegt, bei dem die Kanten 143 der hinteren Fläche 107 der Kassette 106 ungehindert an der Anlagefläche 105 und der übrigen Ausnehmung 140 vorbeibewegt werden können. Dabei ist der Hub H mindestens gleich dem Maß H1. Nach dem Verschwenken der Kassettentrommel 110 wird der Lagerkörper 124 durch den Hydrozylinder 33 wieder zurückgezogen und die Kassettentrommel 110 mit der neuen Kassette 106 gegen den Extrusionskopf 101 gepreßt.

## Patentansprüche

1. Extrusionskopf mit einer Kassette, wobei die Kassette mit ihrer - entgegen der Extrusionsrichtung gesehen - hinteren Fläche an einer von mindestens einem Fließkanal durchdrungenen Anlagefläche des Extrusionskopfes anliegt und gegen diese anpreßbar ist, **dadurch gekennzeichnet**, daß die Kassette (6; 106) in einer Ausnehmung (13, 19; 113) einer um eine zumindest annähernd in der Extrusionsrichtung angeordnete und zu ihr rechtwinklig verlaufende Achse (12; 112) schwenkbaren Kassettentrommel (10; 110) anliegt und von der Kassettentrommel (10; 110) gegen die Anlagefläche (5; 105) des Extrusionskopfes (1; 101) anpreßbar ist, daß die Kassettentrommel (10; 110) eine weitere, um einen Winkel versetzte Ausnehmung (14; 20; 114) für eine weitere Kassette aufweist und daß an die Ausnehmungen (13, 19; 113; 14, 20; 114) zwei mit ihnen fluchtende sich in der jeweiligen Extrusionsrichtung erweiternde innere Durchlaßöffnungen (21, 22) für das Extrudat anschließen.

2. Extrusionskopf nach Anspruch 1, dadurch gekennzeichnet, daß der Winkel zwischen den Ausnehmungen (13, 19; 14, 20) der Kassettentrommel (10) kleiner als 90° ist.

3. Extrusionskopf nach einem der Ansprüche 1 oder 2, dadurch gekennzeichnet, daß die Ausnehmungen (13, 19 bzw. 14, 20) der Kassettentrommel (10) eine hinterschnittene Ausnehmung (38) mit radialer Begrenzung aufweisen.

4. Extrusionskopf nach einem der vorangegangenen Ansprüche, dadurch gekennzeichnet, daß die Kassettentrommel (10) am freien Ende eines um eine feste Achse angelenkten Hebelpaars (25) angeordnet ist.

5. Extrusionskopf nach Anspruch 4, dadurch gekennzeichnet, daß zum Bewegen der Kassettentrommel (10) an den Extrusionskopf (1) heran und von diesem weg und zum Anpressen der Kassettentrommel (10) an den Extrusionskopf (1) getrennte Bewegungs- bzw. Spannvorrichtungen (26, 33) vorgesehen sind.

6. Extrusionskopf nach einem der Ansprüche 1 bis 5, dadurch gekennzeichnet, daß die Anlagefläche (5) des Extrusionskopfes (1) und die ihr entsprechende hintere Fläche (7) der Kassette (6) zylindrisch mit gleichem Radius ausgebildet sind.

7. Extrusionskopf nach einem der Ansprüche 1 bis 5, dadurch gekennzeichnet, daß die Anlagefläche (105) des Extrusionskopfes (101) und die ihr entsprechende hintere Fläche (107) der Kassette (106) eben ausgebildet sind, daß die Kassettentrommel (110) senkrecht zur Auflagefläche (105) bewegbar ist und daß der Extrusionskopf (101) eine die Anlagefläche (105) einschließende, die Schwenkbewegung der Kassettentrommel (110) und der Kassetten (106) zulassende Ausnehmung (140) aufweist.

## Claims

1. Extrusion head with a cartridge, wherein with its rear surface - viewed contrary to the direction of extrusion - the cartridge abuts against a contact surface of the extrusion head penetrating at least one flow channel and may be pressed against this contact surface, characterised in that the cartridge (6; 106) lies in a recess (13, 19; 113) of a cartridge drum (10; 110), which may be swivelled around an axis (12; 112) arranged at least approximately in the direction of extrusion and extending at right angles thereto, and may be pressed against the contact surface (5; 105) of the extrusion head (1; 101) by the cartridge drum (10, 110); that the cartridge drum (10; 110) has a further recess (14; 20; 114) offset at an angle for a further cartridge; and that two inner apertures (21, 22) lying flush with recesses (13, 19; 113; 14, 20; 114) and widening in the respective direction of extrusion for the extrudate adjoin said recesses (13, 19; 113; 14, 20; 114).

2. Extrusion head according to Claim 1, characterised in that the angle between the recesses (13, 19; 14, 20) in the cartridge drum (10) is smaller than 90°.

3. Extrusion head according to one of Claims 1 or 2, characterised in that the recesses (13, 19 or 14, 20) in the cartridge drum (10) have an undercut recess (38) with radial boundary.

4. Extrusion head according to one of the preceding claims, characterised in that the cartridge drum (10) is disposed at the free end of a pair of levers (25) pivoted around a fixed axis.

5. Extrusion head according to Claim 4, characterised in that separate movement or clamping systems (26, 33) are provided to move the cartridge drum (10) towards and away from the extrusion head (1) and to press the cartridge drum (10) against the extrusion head (1).

6. Extrusion head according to one of Claims 1 to 5, characterised in that the contact surface (5) of the extrusion head (1) and the rear surface (7) of the cartridge (6) corresponding thereto are of a cylindrical structure with the same radius.

7. Extrusion head according to one of Claims 1 to 5, characterised in that the contact surface (105) of the extrusion head (101) and the surface (107) of the cartridge (106) corresponding thereto are flat; that the cartridge drum (110) may be moved vertically to the contact surface (105); and that the extrusion head (101) has a recess (140), which encloses the contact surface (105) and permits the swivelling movement of the cartridge drum (110) and the cartridges (106).

## Revendications

1. Tête d'extrusion avec une cassette, la cassette étant appliquée par sa surface arrière - vue dans le sens d'extrusion - contre une surface d'application traversée par au moins un canal d'écoulement en pouvant être comprimée contre celle-ci,
caractérisée en ce que
la cassette (6 ; 106) est appliquée dans un évidement (13, 19 ; 113) d'un tambour à cassettes (10 ; 110) pivotant par rapport à un axe formant un angle droit (12 ; 112) par rapport à ce dernier et disposé au moins aproximativement dans le sens d'extrusion et qu'elle est comprimable contre la surface d'application (5 ; 105) de la tête d'extrusion (1, 101) par le tambour à cassettes (10, 110), en ce que le tambour à cassettes (10 ; 110) présente un autre évidement (14 ; 20 ; 114) décalé d'un angle pour une autre cassette et en ce que, pour le produit d'extrusion, les évidements (13, 19 ; 113 ; 14, 20 ; 114) se prolongent par deux ouvertures de passage (21, 22) internes qui s'élargissent en alignement avec ces derniers dans le sens d'extrusion considéré.

2. Tête d'extrusion selon la revendication 1, caractérisé en ce que l'angle entre les évidements (13, 19 ; 14, 20) du tambour à cassettes (10) est inférieur à 90°.

3. Tête d'extrusion selon l'une des revendications 1 ou 2, caractérisée en ce que les évidements (13, 19 respectivement 14, 20) du tambour à cassettes (10) présentent un évidement contre-découpé (38) délimité radialement.

4. Tête d'extrusion selon l'une des revendications précédentes, caractérisée en ce que le tambour à cassettes (10) est disposé sur l'extrémité libre d'une paire de leviers (25) articulée sur un axe fixe.

5. Tête d'extrusion selon la revendication 4, caractérisée en ce qu'il est prévu, pour amener le tambour à cassettes (10) contre la tête d'extrusion (1) et l'en éloigner ainsi que pour presser le tambour à cassettes (10) contre la tête d'extrusion (1), des dispositifs séparés de serrage et de mouvement (26, 33).

6. Tête d'extrusion selon l'une des revendications 1 à 5, caractérisée en ce que la surface d'application (5) de la tête d'extrusion (1) et la surface arrière (7), lui correspondant, de la cassette (6) sont de forme cylindrique et présentent le même rayon.

7. Tête d'extrusion selon l'une des revendications 1 à 5, caractérisée en ce que la surface d'application (105) de la tête d'extrusion (101) et la surface arrière (107), lui correspondant, de la cassette (106) sont planes, en ce que le tambour à cassettes (110) se déplace perpendiculairement à la surface d'application (105) et en ce que la tête d'extrusion (101) présente un évidement (140) permettant le basculement du tambour à cassettes (110) et des cassettes (106) et comprenant la surface d'application (105).
